# EUROPEAN PATENT APPLICATION

(11) **EP 1 970 849 A1**
(43) Date of publication of application: **17.09.2008**
(21) Application number: 06841743.5
(22) Date of filing: 18.12.2006
(51) Int. Cl.: G06Q 30/00

(54) **SYSTEM AND METHOD FOR REGISTERING AND CERTIFYING ACTIVITY AND/OR COMMUNICATION BETWEEN TERMINALS**

(30) Priority: 19.12.2005 ES 200503214
(71) Applicant: Universidad de Zaragoza, 50005 Zaragoza (ES)
(72) Inventor: MUÑOZ SORO, José Félix, E-50005 Zaragoza (ES); LÁZARO VILLA, José Antonio, E-50005 Zaragoza (ES); GARCÉS GREGORIO, Juan Ignacio, E-50005 Zaragoza (ES); BUESO GUILLÉN, Pedro, E-50005 Zaragoza (ES); SERRANO CINCA, Carlos, E-50005 Zaragoza (ES)
(74) Representative: Pons Arino, Angel
(86) International application number: PCT/ES2006/000691
(87) International publication number: WO 2007/071803

(57) **Abstract**

The invention relates to a system and method for registering and certifying activity and/or communication between terminals, of the type in which a registry and certification service provider registers the telematic content exchanged between a user and a service provider during a transaction using a registry and certification server and issues an electronic certification upon completion of the service. According to the invention, the registry and certification server is connected to an official time server in order to obtain reliable time stamps and to a client capture module which is installed in the user terminal in order to register periodic captures of the interface of the user terminal and data relating to the connections established thereby and to include same in the electronic certification document together with the reliable time stamps. The electronic certification document is authenticated using an electronic signature provided by the registry and certification service provider.

## Description

### OBJECT OF THE INVENTION

The present invention refers to a System and Procedure for registering and certifying activity and/or communication between terminals, designed to provide a user on a terminal with an electronic record or CERTIFICATE, which registers reliably and with the exact content, the operations carried out on it.

The invention can be used, for example, for electronic transactions of any type and from different terminals, such as personal computers, mobile telephones, interactive television, etc. It can be applied to business over the Internet (e-commerce), and interaction with public bodies (e-government) and, in a general manner, to any application, including a simple search for information on the Internet.

### BACKGROUND OF THE INVENTION

Currently, the only proof that a user obtains of a particular transaction carried out from the user's own terminal, and of its content, is that given by the Information Society Services Provider in such a way that afterwards, in most cases, the user has difficulties and even finds it totally impossible to document the transaction so as to be able to claim his rights as a consumer when he feels deceived by the service that he has been given.

In this regard, several patents are known: KR2001095907-A, KR2001079176, JP2005070979-A, JP2004334353-A, KR2002039543-A, KR2002096331-A, KR2204065413-A, KR2004025180-A, US2004268152-A1, GB2358115-A, JP2002163394, US2004039672-A1, US2002038291-A1, US2002038291, KR2002026505-A, WO200103077, US2005050362 and WO0154085-A3 for different technical solutions designed to ensure the veracity and integrity of the transactions carried out over the Internet. Particularly significant, are patents KR2002096331-A, because it is the nearest one to the technical solution presented herein, and the last of the cited ones (WO0154085-A3) because it is a patent with priority of another patent (FR2803961) from a European country (France).

Patent KR2002096331-A describes a content certification system over the Internet. Specifically, it describes a system to transmit contents between two Internet users certifying the content and the issuer's identity by means of: IDs, passwords, fingerprints and an authentications server. The patent forms part of the systems known in Spanish as "electronic notarisation" (in English terminology *Trusted Thrid Parties,* TTPs). These systems are limited to registering documents and contents exchanged between two or more users through electronic means, such as EDI for example. The basic difference with the present application is that this one's objective is not simply to record the electronic content exchanged between the two parties, but rather to register faithfully and certify the information received by the user on the user's terminal in addition to the actions carried out by the user, whether operating on the terminal without a connection or carrying out electronic transactions, and thus connected with one or more other terminals.

For its part, patent W00154085-A3 or its French priority patent, describes a system patented in Europe to carry out secure transactions over the Internet from a personal computer, mobile terminal or telephone. This patent proposes a payment system that does not require sending the user's bank details over the Internet, through the intervention of a trusted third party for both parties (normally a bank), in a similar way to the one proposed by protocols like SET (*Secure Electronic Transaction protocol*).

Therefore, this patent application differs from the preceding ones in that it proposes a System and Procedure that provides the user of electronic services with a record or CERTIFICATE with the full and exact content of the information exchanged during on-line purchases, claims, filled-in forms, etc., in such a way that the user's perceptions are faithfully reflected. This gives the person or people responsible for solving a potential claim access to the exact same information as the user perceived during the transaction presented in the same manner, which is a vitally important aspect in order to appraise a claim appropriately and for which an *ad hoc* solution, such as the one offered by this patent has not yet been proposed.

### DESCRIPTION OF THE INVENTION

The System and Procedure for Registration and Certification of the present invention allows the user to request the presence of an electronic witness, in other words, a Registration and Certification Service provider which through a Registration and Certification Server (hereafter RCS), is responsible for recording what occurs on the terminal (UT) employed by the user and for issuing a certificate that documents in film format the actions carried out that could be of interest, for example in order to accredit a transaction or to justify carrying out a particular task. This record, or CERTIFICATE, will be issued by the RCS following the user's request to finish registering, and will include all the information that the user receives during the transaction, actions carried out and, especially, the OKs given by the user. Additionally, this CERTIFICATE incorporates an advanced electronic signature which means that it has full legal validity and can be used as evidence for the user to claim his rights in the event of infringement. This considerably increases the user's sense of security in his electronic transactions. The CERTIFICATE presents the information as the user observed it on his terminal (computer screen, mobile terminal or interactive TV terminal, for example), in addition to his actions and consent given in such a way that a judge, arbiter, notary or any other interested party can value the exact perceptions (visual and acoustic) that the user had during the transaction and the executed actions.

Therefore, the System and Procedure described in this patent application contains sufficient technical solutions to ensure that the CERTIFICATE encompasses all of the information exchanged, fulfils the relevant legal requirements and guarantees both the veracity and authenticity of its content.

The Registration and Certification Procedure initiates at the user's request and must only conclude at the user's request. Registration and the generation of the record or CERTIFICATE is carried out by an entity that we will call "Registration and Certification Service Provider", which uses for this purpose a computer that we will call the "Registration and Certification Server" (RCS). For its typical or normal use, this machine will be connected to the Internet and carry out its functions over the web.

The user contacts the RCS, for example, through the Web page of the Registration and Certification Service Provider that offers this service, and establishes between the user terminal (UT) and the RCS a secure Internet connection by means of an SSL (*Secure Socket Layer*) or similar protocol. Preferably, SSL will be used because its security services are transparent for the user and the application. The password exchange algorithm is RSA and an X-509 certificate is used so that the user's computer (client) can authenticate the Registration and Certification Server (server). Optionally, the server may also request an X.509 certificate from the user in order to authenticate the user's identity.

Having established the secure connection between the client (UT) and the Server (SRC), the latter will send the user a specific program (the Client Capture Module), adapted to the characteristics of the user's terminal, which will be installed on the user's terminal (UT).

When the user wishes to register an electronic transaction carried out from that terminal, he will request the service through the Registration and Certification Server (RCS) by activating the previously installed Client Capture Module. Activation of the Module, and its activity status, will preferably be accessible and visible through an on-screen display on the terminal (UT) for the user's convenience and peace of mind.

Communication between the Client-Module and the Registration and Certification Server (RCS) is carried out through a secure channel, like the one used for the download and installation on the user's terminal (UT). Before initiating the service, the Registration and Certification Server (RCS) checks the integrity of the Client Capture Module from which it receives the request for the service by verifying its "hash", thus ensuring that the Client-Module is the original and has not been manipulated.

As an option, the Registration and Certification Server (RCS) can request through the Client Capture Module of the user's terminal, the user's identification by means of a password, certificate or other authentication system.

When the Registration and Certification Server (RCS) receives the request, the secure connection will be established and once it is available to carry out the service it will send an acknowledgement (ACK) to inform the user that the registration and certification process is beginning.

As of that moment the Registration and Certification Server (RCS) will act as a witness to the actions or electronic transactions that the user carries out from his terminal. For the time that the Registration and Certification service remains active, the content of the user terminal's screen (UT) will be captured as a bits map or similar format that registers, not the objects exchanged between the client and server, but the result of such exchanges as any observer with access to the terminal screen (UT) would see them. The screen capture is carried out in full, registering all of its content and including both the main window through which the user carries out the transaction in addition to any other information appearing on screen and on other output peripherals that could alter the user's perception, understanding or attitude. The Client-Module likewise registers the user's actions, such as movements of the mouse, clicks on the mouse buttons, keyboard entries, etc.

All of this information is sent sequentially by the Client Capture Module to the Registration and Certification Server (RCS) through the secure connection, in such a way that the CERTIFICATE generated with the information received from the Client Capture Module can be subsequently viewed as a film.

When the information on the terminal screen (UT) originates from a connection between the user's equipment and one or more servers (PS), the servers' IP addresses will be registered, and in the event of SSL connections, the data of the X-509 certificate used by each one of them will also be registered. Optionally, the Registration and Certification Server (RCS) will be able to check the servers' identity by checking their certificates' validity by consulting the CRLs (*Certification Revocation List*) or OCSP (*On Line Certificate Status Protocol*) directories of the Certification Authorities (CA) or Certification Service Providers under the Law on Electronic Signatures that issued them.

If several windows appear on the user terminal's screen (UT) or if the user establishes an electronic transaction with several Service Providers (SP) at the same time, in addition to registering the IP address of each server and, where applicable, verifying their identity, the correlation will be established between each server and the area of the screen or window that presents the information sent. All of this information is transmitted by the Client Capture Module of the user's terminal (UT) to the Registration and Certification Server (RCS) together with the previously mentioned bit maps.

The Registration and Certification Server (RCS) periodically checks that the Client Capture Module has not been altered, by checking its "hash" and that it executes correctly with no manipulation.

Also, the Registration and Certification Server (RCS) frequently consults an Official Time Server (TS) so as to register also the exact time at which the information is received on the user terminal (UT). To do so, it uses the *Network Time Protocol* (NTP) and an official time server, such as the one in Spain of the Royal Institute and Observatory of the Navy in San Fernando Cádiz (according to Royal Decree 2781/1976, of 30 October, which establishes as a national base of the «universal time coordinated» scale, the one held by the Institute and Observatory of the Navy).

The process, which includes capture by the Client-Module of the screens as bit maps and the user's actions on his terminal (UT), sending to the Registration and Certification Server (RCS), the latter recording the abovementioned information, together with the result of the official time consultation and checking the integrity of the Client Capture Module, is carried out periodically until the user finishes the session.

In order to finish the session the user must carry out the corresponding action on the Client Capture Module menu, which will ask for confirmation before sending the Server (RCS) the order to finish registering. Predictably, the user will carry out this action by ordering the service to stop once the electronic transactions the user wished to register have been completed.

When the session is finished, the user will receive on his terminal (UT) a copy of the CERTIFICATE generated by the Registration and Certification Server (RCS), which will be an electronic document signed with the advanced electronic signature of the Registration and Certification Service Provider and which can be visualised as a film by both the user and by anyone with a legitimate interest, such as an arbitration or legal authority. In order to access the document (CERTIFICATE) basic computer knowledge will be sufficient. Unless the user states otherwise, the Registration and Certification Server (RCS) will keep the CERTIFICATE safely and confidentially and will provide the user with a copy at the latter's request.

The CERTIFICATE will contain the following:
- Stamps of the times corresponding to the official registration start and end times, and other times periodically incorporated throughout the record.
- User ID data (optional)
- Screen captures in bit map format
- Captures of mouse clicks with their coordinates, and of keyboard entries.
- Any type of multimedia information, such as sound messages, received by the user or sent by the latter to the server.
- Data of the connections established by the User Terminal (UT): IP addresses of the servers, and if the connections use the SSL protocol or similar, the data of the certificate.
- Information regarding correspondence between each connection and the areas of the screen on which the session window or windows are visualised.

The proposed System and Procedure applies to any type of electronic transaction carried out by the user from the user's terminal (UT), including those whereby communication with the user is carried out exclusively through sound and by a mobile telephone, as in the case of telephone purchases, claims to customer service numbers, banking operations over the phone, etc. In this case, the CERTIFICATE will appear as a film with the sound recorded and displaying all the other information on screen.

Another relevant example is the temporary registration of multimedia content registered by a Terminal (UT). Thanks to the digital cameras included in many mobile terminals an event, such as a traffic accident can be photographed or videoed with or without sound. In this case, certification and registration of both the information acquired by the Mobile Terminal (UT) and the time at which it is acquired can ensure that such information can be used as evidence towards any authority.

Finally, another relevant circumstance is when the user wishes not to register an electronic transaction, but rather the user's own activity on the terminal (UT). An example would be the case of an employee who wishes to document the fact that on a specific time and date he carried out his duty or function, for example by sending an e-mail. In this case, the Registration and Certification Service (RCS) documents the identity of the user, which in this case is particularly relevant, the user's actions on his terminal (UT) and the times at which the actions were carried out.

In order to safeguard the privacy of the user's codes and passwords, the Registration and Certification Server (RCS) will not display in the CERTIFICATE the codes and passwords entered by the user on the windows that request them, although it will be possible to register them as additional information, at the user's request, in order to ensure that maximum security measures are observed.

### BRIEF DESCRIPTION OF THE DRAWINGS

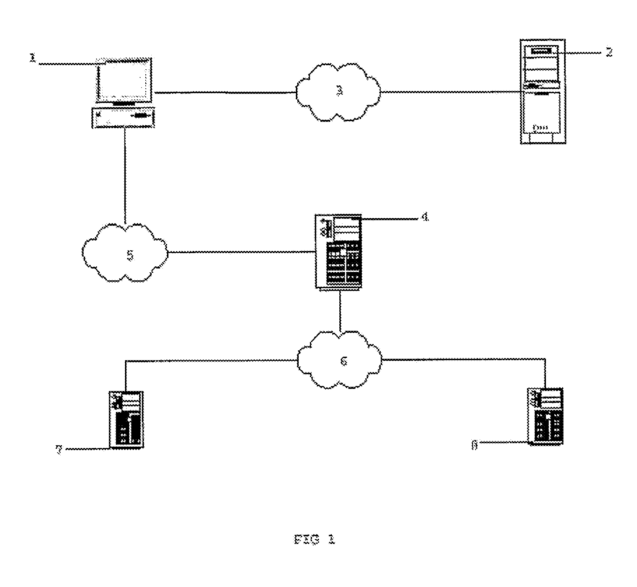

Figure 1 is an outline of the different actors participating in the invention.

### DESCRIPTION OF A PRACTICAL EMBODIMENT OF THE INVENTION

The present descriptive example consists of a particular case whereby a transaction between the user and a bank service provider or supplier is certified. In this example, as can be seen from figure 1, the user's terminal (1) consists of a personal computer, which connects to a server (2) of the bank service provider through an Internet connection (3).

Before the transaction between the agents (1) and (2) can be registered, the user's terminal (1) must contact the Registration and Certification Server (4), also through the Internet, using a secure transmission (5). Through this secure transmission, the Registration and Certification Server (4) sends a Client Capture Module to the user's terminal (1), where it is installed.

Once the Client Capture Module has been installed on (1) during this secure communication or another subsequent one, the user terminal (1) requests the Registration and Certification service from the Server (4) by activating the Client Capture Module, which communicates with a Server-Module resident in (4). Once that communication has been established, the server (4) consults the time from the Time Server (7), opens the file for the record or CERTIFICATE and sends an acknowledgement (ACK) to the user terminal (1), following which the cycle begins of registering on (4) the activity carried out on the user Terminal (1).

Typically, as of that moment the user will start an electronic transaction with the server (2) of the bank service provider. In this case, the Registration and Certification Server (4) includes the IP address of the Provider (2) in the CERTIFICATE. If the transaction is carried out through a secure connection (SSL), the Server (4) checks the authenticity and validity of the certificate of the Service Provider's server (2), by checking the CRLs (*Certificate Revocation List*) or OCSP (*Online Certificate Status Protocol*) directories in the Certification Authority or Certification Services Provider (8), according to the terminology of Law 59/2003 of 19 December, on electronic signatures. The Server(4) incorporates in the CERTIFICATE the data of the server's certificate and the result of the carried out validation. Access to (4) of servers (7) and (8) is established through connections (6), likewise over the Internet.

If the user terminal (1) establishes new connections with other service providers, not represented, while registration is underway, the Registration and Certification System will repeat these operations for each new connection. The moment at which each connection is interrupted will also be registered.

Throughout the provision of the registration service a cycle is carried out in which:
1) the server (4) checks the integrity of the Client Capture Module installed on the user terminal (1).
2) the Client Capture Module captures all of the information that the user receives and executes through his terminal interface (screen, keyboard, mouse, etc). Therefore, it captures all screens, mouse and keyboard inputs and multimedia contents exchanged through (1).
3) the Client Capture Module sends the captured information to the server (4).
4) the server (4) consults the official time from a Time Server (7).
5) the server (4) registers the information received together with the time stamps on the CERTIFICATE.

When the user (1) gives the order to finish, the registration cycle is interrupted, the time is checked and the CERTIFICATE is closed. Next, the Server (4) signs the CERTIFICATE with the advanced electronic signature of the Registration and Certification Service Provider, in guarantee of the document's origin and integrity. Specifically, standard X-509 v.3 is adopted for the certificates used and the PKCS (*Public Key Cryptographic Standards*) formats, in their latest version, for signed key and data formats, without the choice of a particular standard or its implementation limiting in any way the validity of the invention described herein. Subsequently, (4) stores the CERTIFICATE in a secure and confidential manner, sends a copy to the user (1) and waits to receive the latter's confirmation of receipt (ACK) before considering the session finished.

Having described in sufficient detail the nature of the invention as well as its practical embodiment, it should be stated that the abovementioned dispositions represented in the enclosed drawings are subject to modifications in detail insofar as they do not alter the fundamental principle.

## Claims

1. Registration and certification System and Procedure of the activity and/or communication between terminals; of the type that, for example, register the computing content exchanged between a user and a service provider during a transaction, the registration and certification taking place by a Registration and Certification Service Provider, which comprises a Registration and Certification Server which gathers this exchange of data and issues an electronic certification upon completion of the service; **characterised** said System in that the Registration and Certification Server is connected through a network with an official time server in order to obtain reliable time stamps, and also by means of a server module and through a secure connection, with a Client Capture Module installed in the user terminal, in order to register in the Registration and Certification Server periodic captures of the user terminal interface, as well as data of the connections established thereby, including this connection data in the electronic certification document as well as the captures made of the user interface with the reliable time stamps which certify the exact moment of each operation; the electronic certification document issued by the Registration and Certification Server is authenticated by means of an advanced electronic signature of the Registration and Certification Service Provider.

2. System and Procedure according to claim 1, **characterised in that** the Procedure comprises the stages of: installation of the Client Capture Module in the user terminal through a secure connection; service request by the user terminal, with secure connection establishment if it does not exist; consultation of the time by the registration and certification server to the time server; opening of electronic registration index and sending of recognition to the user terminal; registration cycle wherein, after obtaining the IP of the providers to those which are connected to the user, a periodic capture of the image shown on the screen thereof in graphic form takes place, as well as the entries made thereby via keyboard and mouse and multimedia content exchanged, periodic security checks of the Client Capture Module are made and the information captured is sent to the certification register server, which in turn periodically makes queries about the time to the time server to enter in the electronic certification document along with the data captured in order to establish the moment when they were made; request of end of service by the user; signature of the electronic certification document by means of advanced electronic signature of the Registration and Certification Service Provider; issuance and storage of the record; reception of reception confirmation by the user; and closing of the connection with the user.

3. System and Procedure according to claim 1 **characterised in that**, optionally, when the service provider whereto the user connects uses secure protocols, the registration and certification server links up with a certification authority and/or certification service provider in order to verify the identity of the service provider, with the aim of including this authentication in the electronic certification document.

4. System and Procedure according to claim 1 **characterised in that**, optionally, the Registration and Certification Provider verifies the authenticity of the user by means of a password, certificate or any other system.

5. System and Procedure according to claim 1 **characterised in that** the captures of the user interface consists of, at least, the capture in graphic format of the images represented on the screen or monitor thereof; the capture of the actuations made on the mouse if there were any with its coordinates; the capture of the keystrokes made on the keyboard; the capture of any type of multimedia information, such as audible sounds, received or sent by the user; and the capture of any information about the correspondence between each different connection carried out by the user terminal and the areas of the screen where the windows or windows of their session can be seen.

6. System and Procedure according to claim 1 **characterised in that** the electronic certification document is structured like a film that sequentially shows the captures made and the time stamps thereof.

7. System and Procedure according to claim 1 **characterised in that** in a variant of the invention it is also considered that the user terminal works without a connection with no service provider, collecting and certifying the electronic certification document solely by the user activity at their terminal.
